# EUROPEAN PATENT APPLICATION

(11) **EP 4 797 114 A1**
(43) Date of publication of application: **26.08.2026**
(21) Application number: 25159126.9
(22) Date of filing: 20.02.2025
(51) Int. Cl.: G06F 16/23

(54) **COMPUTER-IMPLEMENTED METHOD FOR CLIENT-SERVER INTERACTIONS, A SERVER AND A CLIENT**

(71) Applicant: Exit Games GmbH, 20457 Hamburg (DE)
(72) Inventor: Holmström, Fredrik, 511 63 Skene (SE)
(74) Representative: RGTH

(57) **Abstract**

The invention pertains to a computer-implemented method for updating the state of multiple objects for multiple clients. This method involves maintaining a global state on a server, which is stored in a heap memory arranged in pages. This global state comprises multiple objects, each with an object header that includes an object identification, a version, and a zone. The method identifies zones of interest for each client and creates a snapshot for each client, which includes updates for all objects whose zone matches one of the client's zones of interest. This snapshot is then transmitted to the client. The method is characterized by an allocation counter that increases each time an object is allocated to the heap memory, and the object identification of the allocated object is set to the allocation counter. When an object changes its zone, the object version number increases. The creation of the snapshot involves checking if the zone of the object is a zone of interest for a client and, if positive, checking if the zone and version of the object match the zone and version in the client state. Depending on the outcome, a delta is created between the object state on the server and the object state of the client or a zero state. This calculated delta and an offset of the position in the heap where the delta is to be applied are included in the snapshot.

## Description

### Technical Field

The present invention relates to the field of client-server interactions, in particular with the sharing of a state between multiple users.

The technology involves a server maintaining a global state of objects in a heap memory, and creating snapshots of updates for each client, which are then transmitted to the clients.

The technology also includes steps for handling object allocation. The technology is applicable to the field of distributed computing and data synchronization.

### Background of the Invention

The field of the invention relates to the management of data in a distributed computing environment, specifically to the updating of the state of a plurality of objects for a plurality of clients.

This transmission of state snapshots to multiple client is of particular interest in the field of multiplayer video games, but is also relevant in and applicable for multiple other contexts, for example in managing a fleet of self-driving cars. In the context of multiplayer video games, the global state held by the server would therefore be a "game-state".

In many multi-user scenarios and particularly in video games, it is crucial that clients are provided only with updates for items which are relevant to them, e.g. seen by the character (user) pertaining to a particular client, since providing each user with a full update of all items would not only use excessive bandwidth and memory but also provide the user with inappropriate information, which can, for example, be used for cheating.

To solve these issues, several methods are known in the video game industry for providing multiple clients with unique snapshot, for example "Full Delta Snapshots", "One Snapshot History per Client, and "Per-Object Snapshot History and Per-Client Object Tracking".

Each of the known methods has their own limitations. Full Delta Snapshots, which involve sending the entire game state to all clients, limit the game complexity/size and maximum client count, and prevent interest management. One Snapshot History per Client allows interest management per client but uses a large amount of memory, limiting the number of connected clients. Per-Object Snapshot History and Per-Client Object Tracking also allows interest management per client but requires a lot of metadata to be tracked on the server for each client, increasing the time complexity and memory requirements. These limitations occur analogously if these known methods are applied in areas other than multiplayer video gaming.

### Presentation of the invention: Objective, solution, advantages

The invention aims to overcome the limitations of the known methods. It is therefore an object of the invention to provide a system for updating a state of a plurality of objects for a plurality of clients, which allows for efficient and effective transmission of a unique snapshot per client, for example of a video game's current 'game state', from a sender.

The invention relates to a computer-implemented method for updating a state of a plurality of objects for a plurality of clients. The method comprises maintaining, on a server, metadata in global memory and a global state in a heap memory which is arranged in pages. The global state comprises a plurality of objects, wherein each object comprises an object header. The object header comprises an object identification, a version, and a zone. Also, the metadata comprises an allocation counter which keeps track of the number of objects allocated and, preferably a list of the pages in the heap memory which contain allocated objects and/or a list of the pages in heap memory which contain only deleted objects. Further, the server maintains, for each client, an indication of the state the client has, in particular by keeping a list of the object headers of objects in said client's state.

Any time an object is allocated to the heap memory, the allocation counter is increased and the object identification of the allocated object is set to the allocation counter, thus ensuing that each object is created with an unique ID. Further, when an object changes its zone, the object version number is increased by one. Thus, it is always clear to a user in which zone the object currently resides if due to only a partial state update the user's memory contains multiple instances of the same object.

The method further involves identifying one or more zones of interest for each client. For each client, a snapshot is created which comprises updates for all objects whose zone matches one of the client's zones of interest. The respective snapshot is then transmitted to the client.

Creating the snapshot involves checking, for each object, if the zone of the object is a zone of interest for a client. If this check is positive, it is checked if the zone and version of the object match the zone and version in the version of the state the server knows the client has. If this check is positive, a delta between the object state on the server and the object state of the client is created. If this check is negative, a delta between the object state on the server and a zero state is created. The created delta and an offset of the position in the heap memory at which the delta is to be applied are included in the snapshot.

Deltas are used in Delta encoding and are generally differences between the "new" server state and the "old" state of the respective users which are transmitted to update the user state rather than transmitting complete states. In the present invention, the delta can be created by any means known in the art, e.g. by taking an XOR between the new state and the old state on the binary level.

The term heap memory refers to a region of a server's memory that is used for dynamic memory allocation, where blocks of memory are allocated and deallocated in an arbitrary order. The heap memory is organized in pages, and it stores a global state that includes a plurality of objects.

Each object is assigned to a zone (e.g. a room in a game or a street on a map), and clients may require updates for one or more zones, their so-called "zones of interest", e.g. a room or a street in which the client's user or their player character reside.

The present invention provides an efficient method of updating the state of a plurality of objects for a plurality of clients. By maintaining a global state in a heap memory and creating snapshots for each client based on their zones of interest, the method allows for efficient and targeted updates, since updates for multiple users sharing a zone of interest have to be computed only once.

The present invention addresses the disadvantages of the prior art by managing the objects in the state by a number of zones (e.g. a player's inventory being one zone and a room in a game environment being another zone). Each player logs an "interest" in one or more zones (e.g. their own inventory and the room in which the player character resides) for which they need updates.

Since the objects are arranged in zones and the updates are calculated and distributed according to the respective clients' zones of interest, the management of objects and the creation of updates can be improved compared to the prior art. In particular, the claimed invention provides an update for multiple users without the need for excessive metadata since the method uses the zones and not the individual objects to keep track of a user's interest and also provides object management without complex user-specific object trees since all objects in a given zone can be stored in a list with the same order as they appear in memory. Therefore, the claimed invention speeds up both object lookup and state updates.

In a preferred embodiment of the method, the object header for each object further includes an offset of a previous object and an offset of a next object. This arrangement allows the objects to form a doubly-linked list. The objects in the same zone are ordered in the doubly-linked list in the same order as in the heap memory.

This structure of per-zone doubly-linked lists provides a convenient way to navigate through the objects in the heap memory. In particular, by keeping per-zone doubly-linked lists in which the objects are ordered in the same order as in the heap memory, all object lookups are O(1) because the objects are accessed using offsets inside the heap, which are simple "start + offset" calculations. There are no O(n) or O(log n) time lookups. When writing a specific zone's delta state, the object scan is done in linear memory because the zone doubly-linked list is always sorted in memory order. For several clients who share the same zone delta state, only a single delta pass/computation for that zone is required, as the result can be shared for all clients wanting the same state update, thus massively reducing CPU usage.

In another preferred embodiment of the method, deleting an object from the global state involves removing said object from the doubly-linked list. This operation can, for example, be performed by adjusting the offsets in the object headers of the neighbouring objects in the list. Preferably, the offset of the next object in the previous object's header is updated to point to the object following the one being deleted. Similarly, the offset of the previous object in the next object's header is updated to point to the object preceding the one being deleted. This advantageously removes the deleted object from the doubly-linked list, while maintaining the order and integrity of the remaining objects in the list. This approach to object deletion is efficient and ensures that the global state and the doubly-linked list remain synchronized.

In another preferred embodiment of the method, deleting the object from the global state further involves setting the object's zone and/or object identification and/or the object version to zero to mark the object as deleted in the global state. By setting these fields to zero, it is advantageously ensured that the deleted object is not included in any future snapshots created for the clients.

In another preferred embodiment of the method, pages in the heap memory can be recycled for use with different objects, in particular with objects of different sizes, if said page contains only deleted objects. In this embodiment, each page of the heap memory includes a page version, which is increased, when the page is recycled for use with different objects. In this case, the process of checking if the zone and version of the object match the zone and version in the client state also includes checking if the version of the page on which the object is allocated matches between the client and the server. This additional check ensures consistency between the client and server states. If the page versions do not match, this indicates that the page has been recycled on the server since the client's last update. In this case, a delta can preferably be created between the object state on the server and a zero state, and this delta is preferably included in the snapshot.

In another preferred embodiment of the method, creating a delta involves calculating a difference between the global state and the client state on a binary level. This binary-level comparison can be performed using bitwise operations, which are typically supported by modern processors. The resulting binary delta can then be easily compressed to provide a compact and efficient-to-transmit snapshot. Once the binary delta has been calculated, it can be included in the snapshot along with the offset of the position in the heap at which the delta is to be applied.

In another preferred embodiment of the method, the client receives the snapshot and decompresses it. The decompression of the snapshot involves, for each delta in the snapshot, checking if the offset points to an ID value of an object header. If yes, the memory for the object is cleared and the next two offset-delta pairs are read. If the offset does not point to an ID value of an object header, the method involves finding the object in the current local state and comparing the object version, object ID, and, preferably, page version, of the object in the current state and the object in the received snapshot. If the values are the same, the delta is added to the current state. If at least one of the values differs, the object in the new state is set to the delta directly. This approach ensures that the client's state is updated accurately and efficiently, based on the updates contained in the received snapshot.

The present invention also relates to a computer-readable medium that includes information which, when executed on one or more processors, performs the method as described above. The computer-readable medium can be any data storage device that can store data which can thereafter be read by a computer system. Examples of the computer-readable medium include read-only memory, random-access memory, CD-ROMs, DVDs, magnetic tape, optical data storage devices, and carrier waves. The computer-readable medium can also be distributed over network-coupled computer systems so that the computer-readable code is stored and executed in a distributed fashion.

The present invention also relates to a server comprising a global memory for storing metadata, a heap memory arranged in pages, a management module, in particular for managing the memory, a compression module, in particular for creating and compressing the snapshots, and an interface module for transmitting snapshots to a plurality of clients. The heap memory is configured to store the state of a plurality of objects, each object comprising an object header that includes an object ID, an object version, and a zone. The management module is configured to increase the allocation counter and set the object ID to the new value of the allocation counter when an object is allocated to the heap memory. When an object changes its zone, the management module is configured to increase the object version. The compression module is configured to create, for each of the plurality of clients, a snapshot comprising updates for all objects whose zone matches one of the client's zones of interest. For each object for which the zone of the object is a zone of interest for the client, the compression module checks if the zone and version of the object match the zone and version in the client state. If this check is positive, the compression module creates a delta between the object state on the server and the object state of the client. If the check is negative, the compression module creates a delta between the object state on the server and a zero state. The calculated delta and an offset of the position in the heap memory at which the delta is to be applied are included in the snapshot by the compression module.

The described server is in particular suited to carry out a method of any of the embodiments as described above. Therefore, the above explanations regarding the method, in particular regarding the method steps pertaining to a server, apply analogously to the server as well

In a preferred embodiment of the server, the object header for each object in the server's heap memory further includes an offset of a previous object and an offset of a next object. This arrangement allows the objects in a given zone to form a doubly-linked list. The objects in the zone are ordered in the doubly-linked list in the same order as in the heap memory.

This doubly-linked list structure provides a convenient way to navigate through the objects in the heap memory and a quick way for object insertion and removal.

In another preferred embodiment of the server, the management module of the server is configured to delete an object from the global state. The deletion of the object involves removing the said object from the doubly-linked list. This operation can preferably be performed by adjusting the offsets in the object headers of the neighbouring objects in the list. Preferably, the offset of the next object in the previous object's header is updated to point to the object following the one being deleted. Similarly, the offset of the previous object in the next object's header is updated to point to the object preceding the one being deleted.

In another preferred embodiment of the server, the deletion of the object from the global state further involves setting the object's zone and/or object identification and/or object version to zero. This operation effectively marks the object as deleted in the global state.

In another preferred embodiment of the server, creating a new object comprises increasing the allocation counter in the global memory by one, allocating the object in the heap memory, setting the object ID to the new allocation counter, choosing a zone for the object and inserting the new object into that zone's doubly linked list at a position that reflects the object's position in the heap memory.

In another preferred embodiment of the server, moving an object from a first zone to a second zone involves changing the zone ID and increasing the object version in the object header, removing the object from the doubly-linked list of the first zone and inserting the object in the doubly-linked list of the second zone at a position that reflects the object's position in the heap memory relative to the other objects in the list, i.e. inserting it in a way that the ordering of the objects in the doubly-linked list reflects the ordering of the objects in the heap memory.

In another preferred embodiment of the server, each page of the heap memory includes a page version. The management module is configured to recycle a page for use with different objects if said page contains only deleted objects. When the page is recycled for use with different objects, the management module increases the page version. The compression module is further configured to check if the version of the page on which the object is allocated matches between the client and server when checking if the zone and version of the object match the zone and version in the client state. If the page versions do not match, this indicates that the page has been recycled on the server since the client's last update. In this case, the compression module preferably creates a delta between the object state on the server and a zero state, and further preferably includes this delta in the snapshot.

The present invention also relates to a client comprising a memory, an interface module, and a decompression module. The memory includes a global memory configured to hold an allocation counter and a heap memory arranged in pages. The memory structure of the client is preferably configured to reflect the memory structure of the server for the zones for which the client has an interest. The interface module is configured to receive a snapshot from a server. The decompression module is configured to extract a plurality of deltas and respective offsets at which the delta is to be applied from the snapshot. For each delta, if the offset points to an ID value of an object header, the decompression module clears the memory for the object and reads the next two offset-delta pairs. If the offset does not point to an ID value of an object header, the decompression module finds the object in the current local state and compares the object version, object ID, and, preferably, page version, of the object in the current state and the object in the received state. If the values are the same, the decompression module adds the delta to the current state. If at least one of the values differs, the decompression module sets the object in the new state to the delta directly.

The described client is in particular suited to carry out a method of any of the embodiments as described above. Therefore, the above explanations regarding the method, in particular regarding the method steps pertaining to a client, apply analogously to the server as well

The invention also relates to a system comprising at least one server and at least one client, connected via a network. The server and client are configured as described above. The network can be any type of network that allows for the transmission of data between the server and the client, such as a local area network (LAN), a wide area network (WAN), or the internet.

In this system, the server preferably maintains a global state of a plurality of objects in a heap memory. The server preferably creates snapshots for each client, which include updates for all objects whose zone matches one of the client's zones of interest. These snapshots are transmitted to the clients via the network.

Upon receiving a snapshot, the client preferably decompresses the snapshot and applies the updates to its local state. This preferably involves checking the zone and version of each object in the snapshot against the zone and version in the client's state, and applying the updates accordingly.

This system allows for efficient and targeted updates of the state of a plurality of objects for a plurality of clients. The use of an allocation counter and object version number enhances the efficiency of the system by allowing for precise tracking and updating of object states. The system also ensures that the client's state remains synchronized with the global state on the server, even when pages of the heap memory are recycled.

### Further details of the invention

Preferred embodiments of the invention are further explained with reference to the appended figures. These figures show schematically:
- Fig. 1:: A schematic of the memory structure
- Fig. 2:: A schematic of the objects forming a doubly linked list
- Fig. 3:: A schematic of the client-server system
- Fig. 4a:: A flow chart of the update method performed on the server
- Fig. 4b:: A flow chart of the update method performed on a client

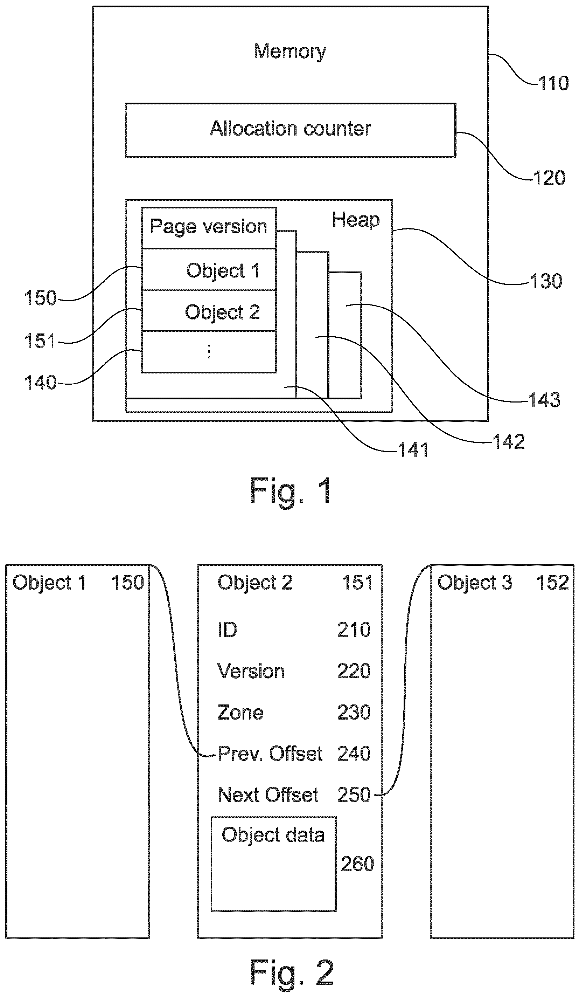

Figure 1 shows a memory structure in accordance with an embodiment of the invention. The memory 110 contains a global memory 120 which holds the allocation counter and a heap memory 130 made up of several pages 140, 141, 142, 143. Each page holds a page header, containing a page version and pointers to the previous and next pages, and a number of objects 150, 151. Preferably, the page header further contains a number or map of the allocated objects on the page.

Figure 2 shows a number of objects 150, 151, 152, which are arranged in a doubly-linked list. Each object contains an object header comprising an object ID 210, an object version 220, a zone to which the object is assigned 230 and pointers 240, 250 to a previous object 150 and a following object 152 in the same zone. Further, the object contains object data 260 which represents the properties of the object in the game state, e.g., if the object represents a gun, an ammunition counter and a load state.

As stated above, moving an object from a first zone to a second zone includes changing the zone 230, increasing the object version 220 and removing the object from the doubly linked list of the first zone and inserting it into the doubly linked list in the second zone at a position which is selected such that the order of objects in the list reflects the order of objects in memory.

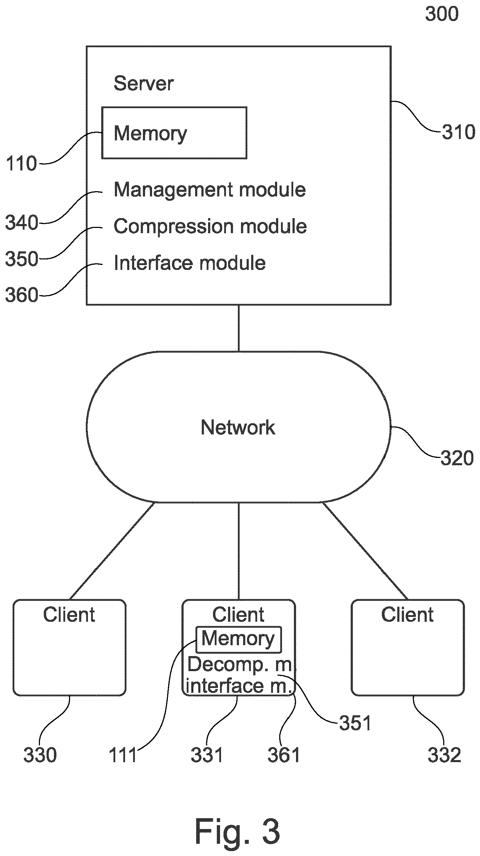

Figure 3 shows a system 300 according to an embodiment of the invention. The system comprises a server 310 holding the memory 110 depicted in Figure 1, and multiple clients 330, 331, 332, connected over a network 320. Each of the clients 330, 331, 332 holds a copy of the memory state contained in the server 310, wherein the state in the client 331 only contains copies of those objects which are assigned to zones which are "zones of interest" to the client 331. To provide updates to the clients 330, 331, 332, the server 310 comprises a management module 340 for creating a delta between a user state and a server state, a compression module 350 for compressing the delta and creating a snapshot for transmission to the clients, and an interface module 360 connected to the network 320 and configured to transmit snapshots. Likewise, the client 331 comprises an interface module 361 for obtaining the snapshots over the network 320 and a decompression module 351 for applying said snapshots.

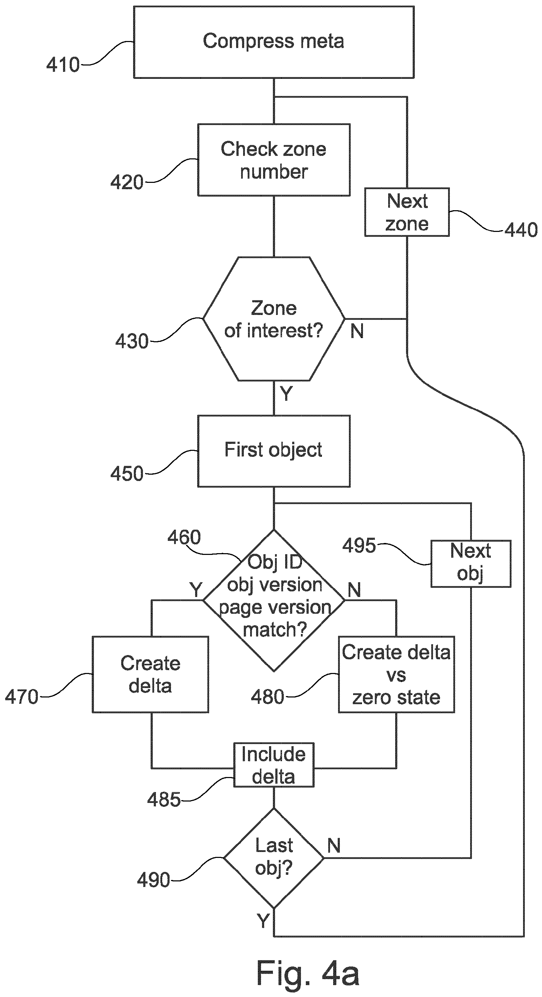

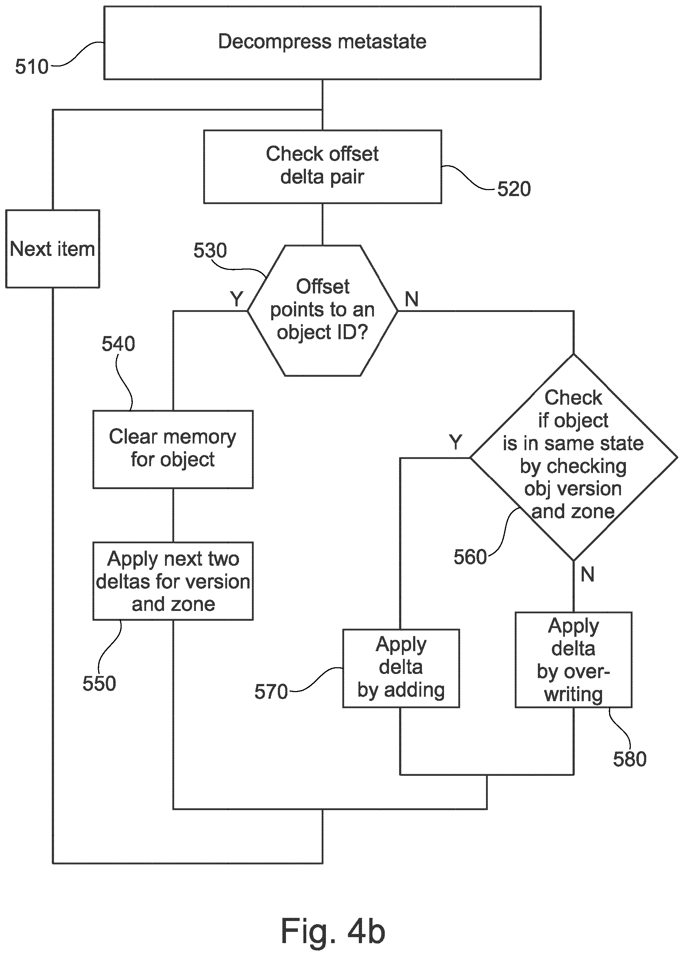

The creation and application of snapshots is now described with reference to Figs. 4a and 4b:
Figure 4a describes the creation of a snapshot for a client 331 as done by the management module 340 of the server 110.

In a first step 410, the metadata in the global memory 120 is compressed. Then, the doubly-linked lists for the zones are traversed: For each zone, in a first step 420, the zone number is checked. If said number does not match a client's zone of interest (branch N in Step 430), the method moves on to the next zone 440. If the zone is identified as a zone of interest to the client (branch Y in Step 430), the doubly linked list of objects of the zone is traversed. In step 450, the first object in the list is obtained. In a following step 460, the object version and page version of said obtained object in the server state are compared with the respective versions in the client state. If said versions match, the object exists in the right zone on the client. Therefore, in a following step 470, the delta is created by subtracting (or taking a bitwise XOR) the object data in the client state from the object data in the server state. If the numbers do not match, the object on the client is outdated, since for example since the last update the object on the server has moved to a different zone and back. Therefore, the method moves to the alternative step 480 of creating the delta against a zero state (i.e. including the whole object data into the delta). The thus created deltas are then included in the snapshot together with the offsets at which they are applied in step 485.

Then in step 490, if the object is not the last object in the list, the method fetches the next object 495 and returns to the comparison of object and page versions 460 for that object. Otherwise, the method returns to the next zone 440 to check 420 if said zone is a zone of interest, until all zones are checked.

The such created set of deltas is then compressed and transmitted to the client 331.

Figure 4b shows the steps performed by the decompression module 361 of the client 331 to apply the transmitted snapshot to its memory state.

In a first step 510, the metadata is decompressed. Then, the list of offset-delta pairs in the snapshot is processed in step 520.

For each offset-delta pair it is then checked in step 530 if said offset points to the position of an object ID. If yes, then the next offsets will refer to a new object. Thus, in a first step 540, the memory for said new object is cleared, and in a second step 550, the next two deltas are applied to fill out the object's version and zone.

If the offset does not point to an object ID, in a further comparison step 560, it is checked if the object version and zone of the old state and the new state match, the delta is applied in step 570 by adding the delta to the state on the client. If one of the values do not match, the object data on the client is out of date, as explained with reference to Fig. 4a. Thus, in an application step 580, the delta is applied directly.

### List of reference numbers

110 memory
120 global memory
130 heap memory
140, 141, 142, 143 Pages
150, 151, 152 Objects
210 Object ID
220 Object version
230 Zone of object
240, 250 Pointers
260 Object data
300 System
310 Server
320 Network
330, 331, 332 Clients
340 Management module
350 Compression module of server
351 Compression module of client
360 Interface module of server
361 Interface module of client
410, 420, 430, 440, 450, 460, 470, 480, 485, 490, 495 method steps performed on server
510, 520, 530, 540, 550, 560, 570, 580 method steps performed on client

## Claims

1. A computer-implemented method for updating a state of a plurality of objects (150, 151, 152) for a plurality of clients (330, 331, 332), the method comprising:
Maintaining, on a server (310),
metadata comprising an allocation counter in a global memory (120), and
a global state in a heap memory (130) which is arranged in pages (140, 141, 142, 143), wherein the global state comprises a plurality of objects (150, 151, 152), wherein each object (150, 151, 152) comprises an object header, the object header comprising:
an object identification (210),
a version (220), and
a zone (230), and
for each client (330, 331, 332), an indication of the state the client has comprising the object headers of the objects in the client state;
identifying one or more zones of interest for each client (330, 331, 332);
creating, for each client (330, 331, 332), a snapshot comprising updates for all objects (150, 151, 152) whose zone (230) matches one of the client's zones of interest; and
transmitting the respective snapshot to the client (330, 331, 332),
**characterized in that**
any time an object (150, 151, 152) is allocated to the heap memory (130), the allocation counter is increased and the object identification (210) of the allocated object (150, 151, 152) is set to the allocation counter,
**in that**, when an object (150, 151, 152) changes its zone (230), the object version number (220) is increased, and
**in that** creating the snapshot comprises:
for each object (150, 151, 152) checking if the zone (230) of the object (150, 151, 152) is a zone of interest for a client (330, 331, 332); if this check is positive:
checking if the zone (230) and version (220) of the object (150, 151, 152) match the zone (230) and version (220) in the client state:
if this check is positive, creating a delta between the object state on the server (310) and the object state of the client (330, 331, 332),
if this check is negative, creating a delta between the object state on the server (310) and a zero state, and
including the calculated delta and an offset of the position in the heap memory (130) at which the delta is to be applied in the snapshot.

2. The method according to claim 1, wherein the object header for each object (150, 151, 152) further comprises an offset of a previous object and an offset of a next object such that the objects form a doubly-linked list, wherein the objects (150, 151, 152) in the same zone (230) are ordered in the doubly-linked list in the same order as in the heap memory (130).

3. The method according to claim 2, wherein deleting an object (150, 151, 152) from the global state comprises removing said object (150, 151, 152) from the doubly linked list.

4. The method according to claim 3, wherein deleting the object (150, 151, 152) from the global state further comprises setting the object's zone (230) and/or object identification (210) and/or the object version (220) to zero, and wherein preferably the metadata contains a list of pages (140, 141, 142, 143) of the heap memory (130) which only contains deleted objects.

5. The method according to claim 3 or 4, wherein each page (140, 141, 142, 143) of the heap memory (130) comprises a page version,
wherein the page (140, 141, 142, 143) can be recycled for use with different objects (150, 151, 152) if said page (140, 141, 142, 143) contains only deleted objects,
wherein the page version is increased when the page (140, 141, 142, 143) is recycled for use with different objects (150, 151, 152),
wherein checking if the zone (230) and version (220) of the object (150, 151, 152) match the zone (230) and version (220) in the client state further includes:
checking if the version of page on which the object (150, 151, 152) is allocated matches between client (330, 331, 332) and server (310).

6. The method according to one of the preceding claims, wherein creating a delta comprises calculating the difference between the global state and the client state on a binary level.

7. The method of one of the preceding claims, wherein the method further comprises, on the client (330, 331, 332):
Receiving the snapshot, and
decompressing the snapshot,
wherein decompressing the snapshot comprises for each delta
if the offset points to an ID value of an object header:
Clearing the memory (110) for the object (150, 151, 152), and
Reading the next two offset-delta pairs; and
if the offset does not point to an ID value of an object header:
Find the object (150, 151, 152) in the current local state, and
compare the object version (220), object ID (210) and, preferably, page version, of the object (150, 151, 152) in the current state and the object (150, 151, 152) in the received snapshot,
if the values are the same, adding the delta to the current state, and
if at least one of the values differs, setting the object (150, 151, 152) in the new state to the delta directly.

8. A computer-readable medium comprising information, which, when executed on one or more processors perform the method according to one of claims 1 to 6.

9. A server (310) comprising:
a global memory (120), configured to hold metadata comprising an allocation counter
a heap memory (130), arranged in pages (140, 141, 142, 143),
a management module (340),
a compression module (350), and
an interface module (360) for transmitting snapshots to a plurality of clients (330, 331, 332),
wherein the heap memory (130) is configured to store the state of a plurality of objects (150, 151, 152), wherein each object (150, 151, 152) comprises an object header comprising an object ID (210), an object version (220) and a zone (230),
and wherein the global memory (120) is further configured to store, for each client (330, 331, 332) of a plurality of clients, an indication of the state the client has comprising the object headers of the objects in the client state **characterized in that**
the management module(340) is configured to
when an object (150, 151, 152) is allocated to the heap memory (130), increase the allocation counter and set the object ID (210) to the new value of the allocation counter, and
when an object changes its zone (230), increase the object version (220),
and **in that** the compression module (350) is configured to create, for each of the plurality of clients(330, 331, 332), a snapshot comprising updates for all objects (150, 151, 152) whose zone matches one of the client's zones of interest,
for each object (150, 151, 152) for which the zone (230) of the object (150, 151, 152) is a zone of interest for the client:
Check if the zone (230) and version (220) of the object (150, 151, 152) match the zone (230) and version (220) in the client state,
if this check is positive, create a delta between the object state on the server (310) and the object state of the client (330, 331, 332),
if this check is negative, create a delta between the object state on the server (310) and a zero state, and
include the calculated delta and an offset of the position in the heap memory (130) at which the delta is to be applied in the snapshot.

10. The server according to claim 9, wherein the object header for each object (150, 151, 152) further comprises an offset of a previous object and an offset of a next object such that the objects (150, 151, 152) form a doubly-linked list, wherein the objects (150, 151, 152) in the same zone (230) are ordered in the doubly-linked list in the same order as in the heap memory (130).

11. The server according to claim 10, wherein the management module (340) is configured to delete an object (150, 151, 152) from the global state, the deletion of the object (150, 151, 152) comprising removing said object (150, 151, 152) from the doubly linked list.

12. The server according to claim 11, wherein the deletion of the object (150, 151, 152) further comprises setting the object's zone (230) and/or object identification (210) and/or object version (220) to zero.

13. The server according to claim 12, wherein each page (140, 141, 142, 143) of the heap memory (130) comprises a page version, wherein the management module (340) is configured to recycle a page (140, 141, 142, 143) for use with different objects (150, 151, 152) if said page (140, 141, 142, 143) contains only deleted objects (150, 151, 152),
wherein the management module (340) is further configured to increase the page version when the page (140, 141, 142, 143) is recycled for use with different objects (150, 151, 152),
wherein the compression module (350) is configured to, when checking if the zone (230) and version (220) of the object (150, 151, 152) match the zone (230) and version (220) in the client state, also to check if the version of page (140, 141, 142, 143) on which the object (150, 151, 152) is allocated matches between client (330, 331, 332) and server (310).

14. A client (330, 331, 332) comprising
a memory (110), comprising a global memory (120) configured to hold an allocation counter and a heap memory (130) arranged in pages(140, 141, 142, 143),
an interface module (361) configured to receive a snapshot from a server (310), and
a decompression module (351), configured to extract a plurality of deltas and respective offsets at which the delta is to be applied from the snapshot and, for each delta:
If the offset points to an ID value (210) of an object header:
Clearing the memory for the object (150, 151, 152), and
reading the next two offset-delta pairs; and
If the offset does not point to an ID value (210) of an object header:
Find the object (150, 151, 152) in the current local state,
compare the object version (220), object ID (210) and, preferably, page version, of the object (150, 151, 152) in the current state and the object (150, 151, 152) in the received state,
if the values are the same, add the delta to the current state, and
if at least one of the values differs, set the object (150, 151, 152) in the new state to the delta directly.

15. A system (300) comprising at least one server (310) according to one of claims 9 to 13 and at least one client (330, 331, 332) according to claim 14, connected via a network (320).
